(19) Europäisches Patentamt
European Patent Office
Office européen des brevets

(11) Veröffentlichungsnummer: **0 226 081 B1**

(12) **EUROPÄISCHE PATENTSCHRIFT**

(45) Veröffentlichungstag der Patentschrift: **22.05.91**

(51) Int. Cl.⁵: **A01N 47/44**, C11D 3/48, //(A01N47/44,33:12,31:16,31:08)

(21) Anmeldenummer: **86116285.7**

(22) Anmeldetag: **24.11.86**

(54) **Desinfektionsmittel.**

(30) Priorität: **02.12.85 DE 3542516**

(43) Veröffentlichungstag der Anmeldung:
**24.06.87 Patentblatt 87/26**

(45) Bekanntmachung des Hinweises auf die Patenterteilung:
**22.05.91 Patentblatt 91/21**

(84) Benannte Vertragsstaaten:
**AT BE CH DE FR GB IT LI NL**

(56) Entgegenhaltungen:
**EP-A- 0 099 209**
**DE-A- 2 310 989**
**DE-A- 3 443 232**
**US-A- 4 125 628**
**US-A- 4 321 257**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Bansemir, Klaus, Dr.**
**Ursulaweg 51**
**W-4018 Langenfeld(DE)**
Erfinder: **Disch, Karlheinz, Dr.**
**Holbeinstrasse 10**
**W-5657 Haan(DE)**
Erfinder: **Hachmann, Klaus, Dr.**
**Am Eichelkamp 14**
**W-4010 Hilden(DE)**

**EP 0 226 081 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft verbesserte Desinfektionsmittelzubereitungen mit einem Gehalt an mikrobizid wirksamen quartären Ammoniumverbindungen und Biguanidverbindungen.

Es gibt bereits eine Reihe von kommerziell verfügbaren Desinfektionsmitteln, die eine Wirkstoffkombination aus mikrobiziden quartären Ammoniumverbindungen und mikrobiziden Biguanidverbindungen vom Chlorhexidintyp und vom Typ der oligomeren Hexamethylenbiguanide enthalten. Es hat sich gezeigt, daß diese bekannten Mittel mikrobiologische Wirkungslücken gegenüber einzelnen gramnegativen Bakterien und Pilzen aufweisen. Außerdem sind solche Desinfektionsmittelzusammensetzungen anfällig gegen Verkeimung bei der Lagerung und während der Standzeiten am Ort des Verbrauchs.

Der vorliegenden Erfindung lag die Aufgabe zugrunde, verbesserte Desinfektionsmittel auf Basis von quartären Ammoniumverbindungen und Biguanidverbindungen aufzufinden, die nicht mit den genannten Nachteilen behaftet sind. Die gestellte Aufgabe wurde durch die nachstehend beschriebene Desinfektionsmittelzubereitung gelöst.

Gegenstand der Erfindung ist eine flüssige, wasserhaltige Desinfektionsmittelzubereitung mit einem Gehalt an mikrobizid wirksamen quartären Ammoniumverbindungen und mikrobizid wirksamen Biguanidverbindungen, die dadurch gekennzeichnet ist, daß sie eine Kombination aus

a) mindestens einer mikrobizid wirksamen quartären Ammoniumverbindung,

b) mindestens einer mikrobizid wirksamen Biguanidverbindung und

c) mindestens einer mikrobizid wirksamen Phenolverbindung

enthält, wobei die Komponenten a und b im Gewichtsverhältnis a : b = (16 - 2) : 1 und die Komponenten a und c im Gewichtsverhältnis a : c = (16 - 2) : 1 vorliegen.

Als mikrobizid wirksame quartäre Ammoniumverbindungen kommen insbesondere Substanzen des Benzalkontyps in Betracht, die der Formel I

$$\left[C_6H_5\text{-}CH_2\text{-}N(CH_3)_2\ R\right]X \qquad (I)$$

entsprechen, in der R einen vorzugsweise geradkettigen Alkylrest mit 8 bis 18 Kohlenstoffatomen und X ein Halogenidanion, insbesondere Chloridion darstellen. Diese quartären Ammoniumverbindungen können als chemische Individuen und als Gemische eingesetzt werden. Beispiele für derartige antimikrobielle quartäre Ammoniumverbindungen sind Dimethyl-benzyl-dodecylammoniumchlorid, Dimethyl-benzyl-tetradecylammoniumchlorid, Dimethyl-benzyl-decylammoniumbromid, Dimethyl-benzyl-octylammoniumchlorid und Kokosalkyl-dimethylbenzylammoniumchlorid, in dem sich der Kokosalkylrest von dem hydrierten Fettsäuregemisch des Kokosöls ableitet. Verbindungen, in denen der Alkylrest R 12 oder 14 Kohlenstoffatome besitzt, können dabei eine bevorzugte Stellung einnehmen.

Als mikrobizid wirksame Biguanidverbindungen eignen sich insbesondere Oligo-hexamethylenbiguanidsalze mit einer Kette der Formel II

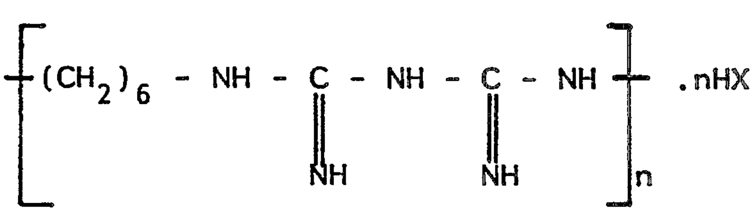

(II),

in der HX eine salzbildende Säurekomponente und n eine Zahl von wenigstens 2, vorzugsweise von 4 bis 6 ist. Derartige oligomere Biguanide und ihre Herstellung sind in der GB-PS 702 268 und der GB-PS 1 152 243 sowie in der DE-OS 2 437 844 beschrieben. Beispiele für Salze von solchen Biguaniden, die sich für die Einarbeitung in die erfindungsgemäßen Kombinationen eignen, sind die entsprechenden wasserlöslichen Mineralsäuresalze, beispielsweise Oligo-hexamethylenbiguanidhydrochlorid.

Als mikrobizid wirksame Biguanidverbindungen kann die erfindungsgemäße Dreierkombination auch eine Verbindung aus der bekannten Klasse der Bis-biguanide enthalten. Solche Bis-biguanide sind in der einschlägigen Patentliteratur mannigfach vorbeschrieben. In diesem Zusammenhang wird insbesondere verwiesen auf EP-OS 0 024 031, US-PS 2 684 924, US-PS 2 990 425, US-PS 3 468 898, US-PS 4 022 834,

US-PS 4 053 636, DE-OS 22 12 259 und DE-OS 26 27 548. Im einzelnen seien die folgenden Beispiele genannt: 1,2-Bis($N^5$-p-chlorphenyl-$N^1$-biguanido)-äthan, 1,2-Bis-($N^5$-p-nitrophenyl-$N^1$-biguanido)-äthan, 1,2-Bis($N^5$-p-hydroxyphenyl-$N^1$-biguanido)-äthan, 1,2-Bis($N^5$-p-chlorbenzyl-$N^1$-biguanido)-äthan, 1,2-Bis($N^5$-p-bromphenyl-$N^5$-hexyl-$N^1$-biguanido)-äthan, 1,2-Bis($N^5$-p-chlorphenyl-$N^5$-2-äthylphenyl-$N^1$-biguanido)-äthan, 1,2-Bis($N^5$-p-chlorphenyl-$N^1$-äthyl-$N^1$-biguanido)-äthan, 1,2-Bis($N^5$-p-methoxyphenyl-$N^1$-biguanido)-äthan, 1,2-Bis($N^5$-p-methylphenyl-$N^1$-biguanido)-äthan, 1,2-Bis($N^5$-3,5-dimethylphenyl-$N^1$-biguanido)-äthan, 1,2-Bis-($N^5$-2,6-dichlorphenyl-$N^1$-biguanido)-äthan, 1,2-Bis($N^5$-2,6-dimethylphenyl-$N^1$-biguanido)-äthan, 1,4-Bis($N^5$-p-chlorphenyl-$N^1$-biguanido)-butan, Bis($N^5$-p-chlorphenyl-$N^1$-biguanido)-methan und 1,3-Bis($N^5$-p-chlorphenyl-$N^1$-biguanido)-propan sowie deren wasserlösliche, nichttoxische Additionssalze, insbesondere deren Glukonate, Hydrochloride und Acetate. Besonders bevorzugt ist hier 1,1'-Hexamethylenbis- 5-(4-chlorphenyl)-biguanid in Form seiner Salze, beispielsweise als Acetat, Hydrochlorid oder Glukonat.

Als mikrobizid wirksame Phenolverbindung eignen sich insbesondere o-Phenylphenol(2-Oxydiphenyl), Benzylphenol, p-Chlor-m-kresol, 2,3,4,6-Tetrachlorphenol, 2,4-Dichlorphenol, Monochlorphenylphenol, o-Benzyl-p-chlorphenol, chlorierte Xylole, Resorcin, Thymol (3-Hydroxy-p-cymol), Eugenol (4-Hydroxy-3-methoxy-1-allylbenzol) und Carvacrol (2-Hydroxy-1-methyl-4-isopropylbenzol).

Die fertigen Desinfektionsmittelzubereitungen enthalten neben der beschriebenen Wirkstoffkombination in der Regel weitere üblicherweise verwendete Bestandteile, die je nach der vorgesehenen Anwendungsform und dem Anwendungszweck ausgewählt werden. Für die flüssigen Zubereitungen kommen als Lösungsmittel Wasser und Gemische aus Wasser und wassermischbaren organischen Lösungsmittel, wie z.B. Ethanol, Isopropanol, Ethylenglykol, Propylenglykol, Ethylethylenglykol und Propylpropylenglykol in Betracht. Solche Lösungen lassen sich gut versprühen, wobei man entweder Druckluft anwendet oder ein in der Aerosoltechnik für die Herstellung von Sprays gebräuchliches Treibmittel einsetzt.

Wenn neben der antimikrobiellen Wirkung eine zusätzliche Reinigungswirkung erwünscht ist, können die Mittel Tenside, insbesondere nichtionische Tenside, enthalten. Beispiele für geeignete Tenside sind Anlagerungsprodukte von 4 bis 40, vorzugsweise 4 bis 20 Mol Ethylenoxid an ein Mol Fettalkohol, Alkylcyclohexanol, Alkylphenol, Fettsäure, Fettamin, Fettsäureamid sowie Alkansulfonamid. Von besonderem Interesse sind Anlagerungsprodukte von 5 bis 16 Mol Ethylenoxid an Kokos- oder Talgfettalkohole, an Oleylalkohol, an Gemischen aus Oleyl- und Cetylalkohol sowie an Mono-, Di- oder Trialkylphenole sowie an Monoalkylcyclohexanole mit 6 bis 14 Kohlenstoffatomen in den Alkylresten. Auch gemischte Anlagerungsprodukte von Ethylenoxid und Propylenoxid an die genannten Verbindungen mit einem aktiven Wasserstoffatom kommen in Betracht. Die genannten Alkylenoxidanlagerungsprodukte können auch endgruppenverschlossen sein, beispielsweise durch Ether- oder Acetalgruppen.

In den erfindungsgemäßen Desinfektionsmittelzubereitungen können ferner Gerüstsubstanzen vorhanden sein; als solche eignen sich beispielsweise Alkalisalze der Glukonsäure, insbesondere Natriumglukonat, die Alkalisalze der Nitrilotriessigsäure, Ethylendiamintetraessigsäure, Hydroxyethandiphosphonsäure, Phosphonobutantricarbonsäure, Milchsäure, Citronensäure oder Weinsäure. Weiterhin kommen als Gerüstsubstanzen die wasserlöslichen Salze höhermolekularer Polycarbonsäuren in Betracht, etwa Polymerisate der Maleinsäure, Itakonsäure, Fumarsäure und Zitraconsäure. Auch Mischpolymerisate dieser Säuren untereinander oder mit anderen polymerisierbaren Monomeren, wie z.B. Ethylen, Propylen, Acrylsäure, Vinylacetat, Isobutylen, Acrylamid und Styrol sind brauchbar.

In die erfindungsgemäßen Zubereitungen können auch Reinigungsverstärker wie Fettsäuremono- und -diethanolamide, beispielsweise Kokosfettsäuremonoethanolamid und Kokosfettsäurediethanolamid, und Anlagerungsprodukte von bis zu 4 Mol Ethylenoxid oder Propylenoxid an Alkylamine mit 12 bis 18 Kohlenstoffatomen oder Fettalkohole mit 8 bis 12 Kohlenstoffatomen und freie Fettalkohole mit 8 bis 12 Kohlenstoffatomen sowie Waschkraftverstärker auf Cellulosebasis eingearbeitet werden.

Üblicherweise werden die Desinfektionsmittelzubereitungen unter Zusatz von Farb- und Duftstoffen konfektioniert. Die Desinfektionsmittelzubereitungen besitzen in der Regel einen pH-Wert im Bereich von 4 bis 10. Gegebenenfalls wird ein entsprechender pH-Wert mit Hilfe von Citronensäure oder Natronlauge eingestellt.

Die erfindungsgemäßen Mittel eignen sich vor allem für die Flächendesinfektion in Krankenhäusern, Schulen, Badeanstalten, öffentlichen Verkehrsmitteln und in gewerblichen Betrieben wie Hotels und Wäschereien. Die für die akute Verwendung bestimmten Desinfektionslösungen werden so eingestellt, daß sie in der Regel von 700 bis 4 500 ppm der Wirkstoffkombination aus den Komponenten a, b und c enthalten.

Soweit es sich bei den Lösungen für die akute Anwendung nicht um Spray-Präparate handelt, werden für die Herstellung der anzuwendenden Lösungen Desinfektionsmittelkonzentrate bereitgestellt, die vorzugsweise wie folgt zusammengesetzt sind:

5 - 20 Gewichtsprozent mikrobizid wirksame Ammoniumverbindung,

1 - 4 Gewichtsprozent mikrobizid wirksame Biguanidverbindung,

0,5 - 4 Gewichtsprozent mikrobizid wirksame Phenolverbindung

und daneben gegebenenfalls Tenside, Gerüstsubstanzen, Reinigungsverstärker, Waschkraftverstärker und organische Lösungsmittel, sowie ad 100 Gewichtsprozent Wasser.

## Beispiele

### Beispiel 1

Zur Prüfung der mikrobiziden Wirksamkeit der erfindungsgemäßen Desinfektionsmittelkombination wurde ein Konzentrat der folgenden Zusammensetzung (GT = Gewichtsteile) durch Vermischen der Einzelbestandteile hergestellt (Produkt A):

| | | |
|---|---|---|
| 15 | GT | $C_{12}$-$C_{11}$-Alkyl-benzyl-dimethylammoniumchlorid (70% $C_{14}$; 30% $C_{14}$) |
| 2 | GT | Oligohexamethylenbiguanid-hydrochlorid, n = 4 bis 6 |
| 2 | GT | o-Phenylphenol |
| 8 | GT | Anlagerungsprodukt von 10 Mol Ethylenoxid an 1 Mol Nonylphenol |
| 1 | GT | Natriumglukonat |
| 0,8 | GT | Ethylendiamintetraessigsäure-tetranatriumsalz |
| 1 | GT | Kokosfettsäuremonoethanolamid |
| 70,2 | GT | Wasser |

Für Vergleichszwecke wurde ein Produkt B, gemäß vorstehender Rezeptur, jedoch ohne o-Phenylphenol, hergestellt. Für eine weiteres Vergleichkonzentrat (Produkt C) wurde in der obenstehenden Rezeptur

das $C_{12}$-$C_{14}$-Alkyl-benzyl-dimethylammoniumchlorid durch die gleiche Menge Didecyl-dimethylammoniumchlorid ersetzt und o-Phenylphenol weggelassen.

Die mikrobizide Wirkung von 1,5 - und 1-volumenprozentigen Verdünnungen der Konzentrate A, B und C wurde gegennüber folgenden Testkeimsuspensionen bestimmt:

1) Staphylococcus aureus $>10^8$ Keime/ml
2) Escherichia coli $>10^8$ Keime/ml
3) Pseudomonas aeruginosa $>10^8$ Keime/ml
4) Proteus mirabilis $>10^8$ Keime/ml
5) Candida albicans $>10^7$ Keime/ml

Die Abtötungszeiten der zu untersuchenden Substanzen wurden mit Hilfe des Keimträgertests nach den Richtlinien für die Prüfung und Bewertung chemischer Desinfektionsverfahren, erster Teilabschnitt, der deutschen Gesellschaft für Hygiene und Mikrobiologie, abgedruckt in Zbl. Bakt. Hyg., I. Abt. Orig. B 172, 534-562, durchgeführt. Die ermittelten Abtötungszeiten sind in der nachstehenden Tabelle I wiedergegeben.

## Tabelle I

Abtötungszeiten in Minuten

| Produkt | Verdünnung (Vol.-%) | Testkeim | | | | |
|---|---|---|---|---|---|---|
| | | 1 | 2 | 3 | 4 | 5 |
| A | 1,5 | 15 | 30 | 30 | 60 | 5 |
| | 1,0 | 15 | 60 | 120 | 120 | 15 |
| B | 1,5 | 15 | 30 | 60 | 60 | 15 |
| | 1,0 | 30 | 60 | 120 | 120 | 60 |
| C | 1,5 | 30 | 60 > | 120 | 120 | 15 |
| | 1,0 | 30 | 120 > | 120 | 120 | 30 |

Beispiel 2

Durch Vermischen der Einzelbestandteile wurde ein Flächendesinfektionsmittelkonzentrat der folgenden Zusammensetzung erhalten:

| | | |
|---|---|---|
| 15 | GT | $C_{12}$-$C_{14}$-Alkyl-benzyl-dimethylammoniumchlorid (70% $C_{12}$; 30 % $C_{14}$) |
| 4 | GT | Oligohexamethylenbiguanid-hydrochlorid, n = 4 bis 6 |
| 4 | GT | o-Phenylphenol |
| 7 | GT | Anlagerungsprodukt von 5 Mol Ethylenoxid und 4 Mol Propylenoxid an 1 Mol $C_{12}$-$C_{14}$-Fettalkohol |

| | | | |
|---|---|---|---|
| | 1 | GT | Natriumglukonat |
| | 8,3 | GT | Nitrolotriessigsäure-trinatriumsalz |
| | 1 | GT | Phosphonobutantricarbonsäure |
| | 5 | GT | Harnstoff |
| ad | 100 | GT | Farbstoff, Duftstoff, Wasser |

Beispiel 3

Durch Vermischen der Einzelbestandteile wurde ein Flächendesinfektionsmittelkonzentrat der folgenden Zusammensetzung erhalten:

| | | | |
|---|---|---|---|
| | 20 | GT | $C_{12}$-$C_{14}$-Alkyl-benzyl-dimethylammoniumchlorid (70 % $C_{12}$; 30 % $C_{14}$) |
| | 3 | GT | Oligohexamethylenbiguanid-hydrochlorid, n = 4 bis 6 |
| | 5 | GT | o-Phenylphenol |
| | 10 | GT | Anlagerungsprodukt von 10 Mol Ethylenoxid an 1 Mol Oleyl-/Cetylalkoholgemisch |
| | 1 | GT | Kokosfettsäuremonoethanolamid |
| | 1 | GT | Ethylendiamintetraessigsäure-tetranatriumsalz |
| | 4 | GT | Harnstoff |
| ad | 100 | GT | Farbstoff, Duftstoff, Wasser |

## Ansprüche

1. Flüssige, wasserhaltige Desinfektionsmittelzubereitung mit einem Gehalt an mikrobizid wirksamen quartären Ammoniumverbindungen und mikrobizid wirksamen Biguanidverbindungen, dadurch gekennzeichnet, daß sie eine Kombination aus

a) mindestens einer mikrobizid wirksamen quartären Ammoniumverbindung der Formel I,

$$\left[C_6H_5\text{-}CH_2\text{-}N\ (CH_3)_2R\right] X \qquad (I)$$

in der R einen vorzugsweise geradkettigen Alkylrest mit 8 bis 18 Kohlenstoffatomen und x ein Halogenidanion darstellen

b) mindestens einem Oligo-hexamethylenbiguanidsalz der Formel II,

$$\left[(CH_2)_6\text{-}NH\text{-}\underset{\underset{NH}{\|}}{C}\text{-}NH\text{-}\underset{\underset{NH}{\|}}{C}\text{-}NH\right]_n .nHX \qquad (II),$$

in der HX eine salzbildende Säurekomponente und n eine Zahl von wenigstens 2 bedeuten,

c) mindestens einer mikrobizid wirksamen Phenolverbindung ausgewählt aus der aus o-Phenylphenol, Benzylphenol, p-Chlor-m-kresol, 2,3,4,6-Tetrachlorphenol, 2,4-Dichlorphenol, Monochlorphenylphenol, o-Benzyl-p-chlorphenol, chlorierten xylole, Resorcin, Thymol, Eugenol und Carvacrol bestehenden Gruppe
enthält, wobei die Komponenten a und b im Gewichtsverhältnis a : b = (16-2) : 1 und die Komponenten a und c im Gewichtsverhältnis a : c = (16-2) : 1 vorliegen.

2. Desinfektionsmittelzubereitung nach Anspruch 1, dadurch gekennzeichnet, daß die mikrobizid wirksame Biguanidverbindung ein Bis-biguanid ist.

3. Desinfektionsmittelzubereitung nach Anspruch 2, dadurch gekennzeichnet, daß die mikrobizid wirksame Biguanidverbindung 1,1'-Hexamethylenbis- [5-(4-chlorphenpyl)-biguanid] ist.

4. Desinfektionsmittelkonzentrat nach den Ansprüchen 1 bis 6, dadurch gekennzeichnet, daß es

5 - 20 Gewichtsprozent mikrobizid wirksame Ammoniumverbindung,

1 - 4 Gewichtsprozent mikrobizid wirksame Biguanidverbindung,

0,5 - 4 Gewichtsprozent mikrobizid wirksame Phenolverbindung

und daneben gegebenenfalls Tenside, Gerüstsubstanzen, Waschkraftverstärker, Komplexbildner, und organische Lösungsmittel in üblichen Mengen, sowie Wasser enthält.

## Claims

1. A liquid, aqueous disinfectant preparation containing microbicidal quaternary ammonium compounds and microbicidal biguanide compounds, characterized in that it contains a combination of
a) at least one microbicidal quaternary ammonium compound corresponding to formula (I)

$$\left[C_6H_5-CH_2-N(CH_3)_2R\right] X \qquad (I)$$

in which R is a preferably straight-chain $C_8$-$C_{18}$ alkyl group and X is a halide anion,
b) at least one oligohexamethylene biguanide salt corresponding to formula (II)

$$\left[(CH_2)_6 - NH - \underset{\underset{NH}{\|}}{C} - NH - \underset{\underset{NH}{\|}}{C} - NH\right] \cdot nHX \qquad (II)$$

in which HX is a salt-forming acid component and n is a number of at least 2,
c) at least one microbicidal phenolic compound selected from the group consisting of o-phenylphenol, benzylphenol, p-chloro-m-cresol, 2,3,4,6-tetrachlorophenol, 2,4-dichlorophenol, monochlorophenyl phenol, o-benzyl-p-chlorophenol, chlorinated xylenes, resorcinol, thymol, eugenol and carvacrol,
components a) and b) being present in a ratio by weight a:b of (16-2):1 while components a) and c) are present in a ratio by weight a:c of (16-2):1.

2. A disinfectant preparation as claimed in claim 1, characterized in that the microbicidal biguanide compound is a bis-biguanide.

3. A disinfectant preparation as claimed in claim 2, characterized in that the microbicidal biguanide compound is 1,1'-hexamethylene-bis-[5-(4-chlorophenyl)-biguanide].

4. A disinfectant concentrate as claimed in claims 1 to 6, characterized in that it contains

| | | | |
|---|---|---|---|
| 5 | to | 20 | % by weight microbicidal ammonium compound |
| 1 | to | 4 | % by weight microbicidal biguanide compound, |
| 0.5 | to | 4 | % by weight microbicidal phenolic compound |

and, optionally, surfactants, builders, detergency boosters, complexing agents and organic solvents in typical quantities and also water.

## Revendications

1. Composition de désinfectant liquide aqueuse, ayant une teneur en composés d'ammonium quaternaire à action microbicide et en composés biguanide à action microbicide, caractérisé en ce qu elle contient une association de
   a) au moins un composé d'ammonium quaternaire à action microbicide de formule I

$$\left[C_6H_5-CH_2-N(CH_3)_2R\right]X \qquad (I)$$

   dans laquelle R représente un radical alkyle de préférence à chaîne droite ayant de 8 à 18 atomes de carbone et X représente un anion halogénure,
   b) au moins un sel d'oligohexaméthylènebiguanide de formule II

$$\left[(CH_2)_6 - NH - \underset{\underset{NH}{\|}}{C} - NH - \underset{\underset{NH}{\|}}{C} - NH\right]_n .nHX \qquad (II).$$

   dans laquelle Hx représente un composant acide salifiant et n représente un nombre égal à 2 au moins,
   c) au moins un composé phénolique à action microbicide, choisi parmi l'o-phénylphénol, le benzylphénol, le p-chloro-m-crésol, le 2,3,4,6-tétrachlorophénol, le 2,4-dichlorophénol, le monochlorophénylphénol, l'o-benzyl-p-chlorophénol, des xylènes chlorés, le résorcinol, le thymol, l'eugénol et le carvacrol,
   les composants a et b étant présentés en rapport pondéral a : b = (16-2) : 1 et les composants a et c étant présents en rapport pondéral a : c = (16-2) : 1.

2. Composition de désinfectant selon la revendication 1, caractérisée en ce que le composé biguanide à action microbicide est la bis-biguanide.

3. Composition de désinfectant selon la revendication 2, caractérisée en ce que le composé biguanide à action microbicide est la 1,1'-hexaméthylènebis-[5-(4-chlorophényl)-biguanide].

4. Concentré de désinfectant selon l'une quelconque des revendications 1 à 6, caractérisé en ce qu'il contient

5 - 20 % en poids de composé d'ammonium à action microbicide,

1 - 4 % en poids de composé biguanide à action microbicide,

0,5 - 4 % en poids de composé phénolique à action microbicide

et en outre, éventuellement, des agents tensioactifs, substances de soutien, renforçateurs de pouvoir détergent, agents complexants et solvants organiques en quantités usuelles, ainsi que de l'eau.